# EUROPEAN PATENT APPLICATION

(11) **EP 2 485 129 A1**
(43) Date of publication of application: **08.08.2012**
(21) Application number: 10820066.8
(22) Date of filing: 31.08.2010
(51) Int. Cl.: G06F 3/048, G06F 9/48

(54) **INFORMATION TERMINAL, DISPLAY METHOD, AND NON-TRANSITORY COMPUTER READABLE MEDIUM HAVING PROGRAMME STORED THEREUPON**

(30) Priority: 02.10.2009 JP 2009230461
(71) Applicant: NEC Corporation, Tokyo 108-8001 (JP)
(72) Inventor: TANAKA, Hideaki, Tokyo 108-8001 (JP)
(74) Representative: Vossius & Partner
(86) International application number: PCT/JP2010/005362
(87) International publication number: WO 2011/039940

(57) **Abstract**

The present invention aims to provide an information terminal, a display method, and a program that can share information of applications operating in multi-task by simple operations. An information terminal according to the present invention can execute first and second applications at the same time, and includes a display control unit 40 that generates screen data in which between first and second display windows regarding the first and second applications, the display window regarding the application to be operated by the user is preferentially displayed in front, a display device 50 that performs image display according to the screen data, and an input device 60 that accepts operations, in which the display control unit 40 obtains attribute information of the second application and passes it to the first application in response to an operation to the input device 50 by the user when the first application is an object to be operated without switching the object to be operated to the second application.

## Description

### Technical Field

The present invention relates to an information terminal, a display method, and a program, and particularly to an information terminal, a display method, and a non-transitory computer readable medium storing a program that use multi-task.

### Background Art

When a plurality of applications including e-mail, WEB browser, and phonebook are operated in an information terminal, information used in each application may be shared and the applications may be executed, such as notifying the other party of data in the phonebook using e-mail. As mentioned so far, when the information used in each application is shared, for example the application regarding the phonebook is selected first, and data such as a name and a telephone number is copied. Next, a display screen is switched to the application regarding the e-mail. Further, an operation of pasting the data copied from the application regarding the phonebook over a screen that displays the application regarding e-mail is required. In regard to such information terminal that realizes multi-task, techniques described are disclosed.

PTL 1 discloses the technique to combine and execute a plurality of tasks when a multimedia end device executes a multimedia application. For example, it is possible to execute by a computer the control to output sound output from a music player or the like that is connected to the computer to a speaker etc. via a telephone communication line that is connected to the computer, and to save it to a recording medium that is connected to the computer.

PTL 2 discloses the technique that when a multi-task process for operating a plurality of applications is performed in a device with a small screen such as a mobile telephone terminal, an operating state of each task is confirmed by simple operations, and further, the task in an inactive state is activated.

PTL 3 discloses the technique that can facilitates the operation at the time of executing multi-task since same or different applications can be displayed at the same time on a plurality of display units by including the plurality of display units in a mobile terminal device.

### Citation List

### Patent Literature

PTL 1: Japanese Unexamined Patent Application Publication No. 6-266570
PTL 2: Japanese Unexamined Patent Application Publication No. 2004-62369
PTL 3: Japanese Unexamined Patent Application Publication No. 2006-279361

### Summary of Invention

### Technical Problem

However, in the information terminal used in general, an operation in order to display an application that displays information to copy the information, and switch to another application to use the copied information in the application has been an operation that bothers a user of the information terminal. Further, even in the above PTLs 1 to 3, there is no disclosure of the technique that solves the bothersome felt at the time of the switching operation of the applications.

The present invention is made in order to solve such problem, and aims to provide an information terminal, a display method, and a non-transitory computer readable medium storing a program that can share information of the applications that operate in multi-task using simple operations.

### Solution to Problem

In a first exemplary aspect of the present invention, an information terminal includes a display control means that can execute first and second applications at the same time and also generates screen data so that, between a first display window regarding the first application and a second display window regarding the second application, the display window regarding one of the applications, which is an object operated by a user, is preferentially displayed in front, a display device that performs image display according to the screen data, and an input device that accepts an operation by the user, in which in response to an operation to the input device by the user when the first application is the object to be operated, the display control means obtains attribute information regarding the second application, which is not the object to be operated, and passes it to the first application without switching the object to be operated to the second application.

In a second exemplary aspect of the present invention, a display method includes when first and second applications can be executed at the same time, generating screen data so that, between a first display window regarding the first application and a second display window regarding the second application, the display window regarding one of the applications, which is an object to be operated by a user, is preferentially displayed in front, and in response to an operation by the user when the first application is the object to be operated, obtaining attribute information regarding the second application, which is not the object to be operated, and passing it to the first application without switching the object to be operated to the second application.

In a third exemplary aspect of the present invention, a non-transitory computer readable medium storing a program that causes a computer included in an information terminal executes when first and second applications can be executed at the same time, a step of generating screen data so that, between a first display window regarding the first application and a second display window regarding the second application, the display window regarding one of the applications, which is an object to be operated by a user, is preferentially displayed in front, and a step of, in response to an operation by the user when the first application is the object to be operated, obtaining attribute information regarding the second application, which is not the object to be operated, and passing it to the first application without switching the object to be operated to the second application.

### Advantageous Effects of Invention

The present invention provides an information terminal, a display method, and a non-transitory computer readable medium storing a program that can share information of applications that operate in multi-task using simple operations.

### Brief Description of Drawings

Fig. 1 is a block diagram of an information terminal according to an exemplary embodiment;
Fig. 2 is a block diagram of the information terminal according to the exemplary embodiment;
Fig. 3 is a view showing a relationship of an application and attribute information according to the exemplary embodiment;
Fig. 4 is a block diagram of a mobile terminal according to the exemplary embodiment;
Fig. 5 is a view showing a flow of processes to pass the attribute information to an active application 20 according to this exemplary embodiment;
Fig. 6 is a view showing a screen transition for displaying the attribute information related to an inactive application according to the exemplary embodiment;
Fig. 7 is a view showing a screen transition for displaying the attribute information related to the inactive application according to the exemplary embodiment;
Fig. 8 is a view showing a screen transition for displaying the attribute information related to the inactive application according to the exemplary embodiment;
Fig. 9 is a view showing a screen transition for displaying the attribute information related to a plurality of inactive applications according to the exemplary embodiment;
Fig. 10 is a view showing a screen transition for preconfiguring the application and the attribute information according to the exemplary embodiment; and
Fig. 11 is a view showing a screen transition for displaying the attribute information relating to the inactive application in a state in which the preconfiguration of the application and the attribute information is performed.

### Description of Embodiments

### [Exemplary embodiment]

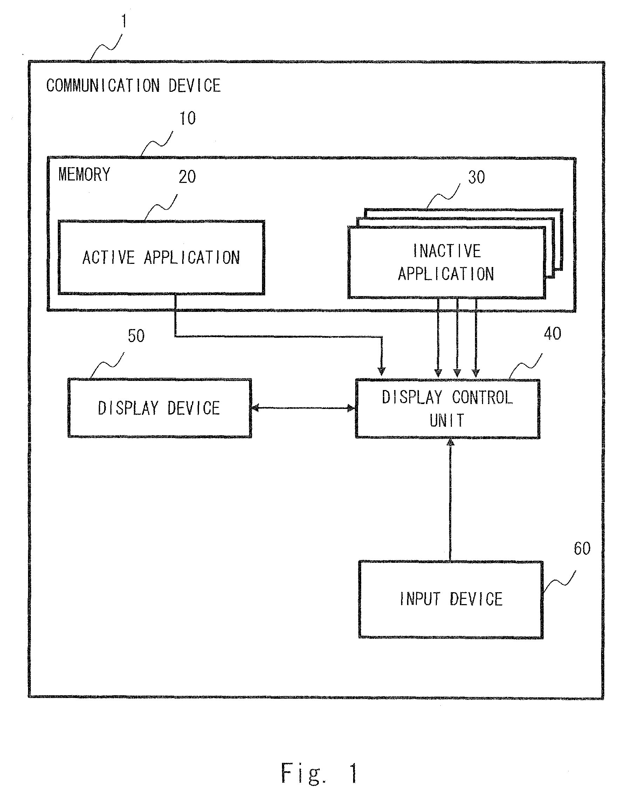

Hereinafter, an exemplary embodiment of the present invention is explained with reference to the drawings. The information terminal according to the exemplary embodiment of the present invention is explained using Fig. 1. An information terminal 1 includes a memory 10 for storing a program that executes an active application 20 and an inactive application 30, a display control unit 40, a display device 50, and an input device 60.

The active application 20 is an application to be operated by a user among executable applications. Specifically, when information is input using a keyboard, a numerical keypad etc. that is used for inputting a telephone number or the like in a mobile terminal, the input information is reflected to a display window regarding the active application 20.

The inactive application 30 is an application which is not to be operated by the user among the executable applications. That is, even when the information is input using the keyboard or the like, the input information will not be reflected to the display window regarding the inactive application 30. Further, the program that executes the active application 20 and the inactive application 30 is developed and stored to the memory 10.

Here, the active application 20 and the inactive application 30 can be switched by an operation performed by the user. A button (multi-task key) may be provided that is dedicated for switching the active application 20 and the inactive application 30, and a combination of buttons to be pressed on the keyboard or the like may be used to switch.

The display control unit 40 generates screen data in which the display window regarding the active application 20 is preferentially displayed to the front rather than the inactive application 30. Moreover, without switching an object to be operated to the inactive application 30, the attribute information regarding the inactive application 30, which is not to be operated, is obtained in response to an operation of the input device 60 by the user, and is passed to the active application 20. The display control unit 40 is composed of CPU (Central Processing Unit), MPU (Micro Processing Unit), etc. that operates according to a program for executing the process in the above display control unit 40.

The display device 50 displays an image according to the screen data generated by the display control unit 40. The display device 50 is composed of an LCD (Liquid Crystal Display), for example.

In response to a user operation, the input device 60 obtains the attribute information regarding the inactive application 30, which is not to be operated, without switching the inactive application 30 to the active application 20, and passes it to the active application 20. The input device 60 may be a button or the like dedicated for the operation to pass the attribute information associated with the inactive application 30 to the active application 20, or an input device etc. including a plurality of buttons that enable the operation to pass the attribute information associated with the inactive application 30 to the active application 20 by a combination of existing buttons. Further, the input device 60 may be a touch panel that operates icons displayed on the LCD.

As described above, by operating the input device 60 using the information terminal according to Fig. 1, it is possible to pass the attribute information associated with the inactive application 30 to the active application 20 without switching the state of the inactive application 30 to an active state. Then, user convenience is improved in regard to the operation executed by multi-tasking and executed in order to use the information used in a different application in other application.

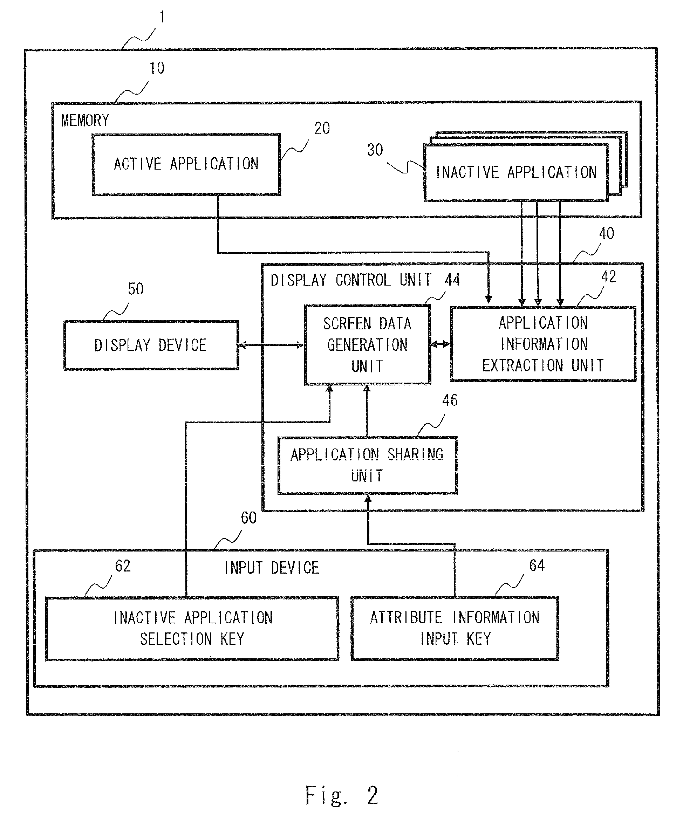

Next, a specific configuration example of the information terminal according to the exemplary embodiment of the present invention is explained using Fig. 2. Since the memory 10 that stores the program for executing the active application 20 and the inactive application 30 and the display device 50 have similar configuration as Fig. 1, the explanation is omitted.

The display control unit 40 includes an application information extraction unit 42, a screen data generation unit 44, and an application sharing unit 46. Further, the input device 60 includes an inactive application selection key 62 and an attribute information input key 64.

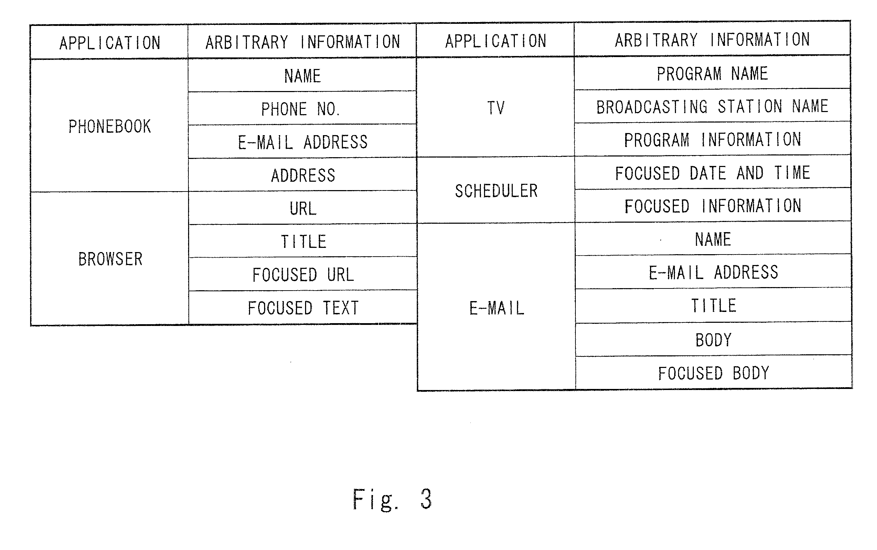

The application information extraction unit 42 extracts the attribute information associated with each application from the active application 20 and the inactive application 30. The attribute information is explained using Fig. 3. Fig. 3 shows the attribute information associated with each application. For example, when the application regarding the phonebook is started, the application information extraction unit 42 extracts each piece of information, which is a name, a telephone number, an e-mail address, and an address, as the attribute information. When the application regarding the browser is started, the application information extraction unit 42 extracts each piece of information, which is an URL (Uniform Resource Locator), a title, a focused URL, and focused text of a homepage or the like viewed using the application, as the attribute information. Further, when the application regarding the television is started, each piece of information, which is a program name of a TV program viewed using the application, a broadcasting station name that is broadcasting the TV program, and program information, is extracted as the attribute information. Furthermore, when the application regarding the schedule is started, each piece of information, which is focused date and time and focused schedule information, is extracted as the attribute information. Additionally when the application regarding the e-mail is started, each piece of information, which is a name and an e-mail address of a sender, a title, a body, and focused body regarding the received e-mail, is extracted as the attribute information. The application and the attribute information displayed in Fig. 3 is merely an example, but other attribute information may be associated with the application shown in Fig. 3, and the attribute information regarding the application other than the application shown in Fig. 3 may be extracted.

Turning back to Fig. 2, when a display indication signal indicating of displaying the attribute information associated with the inactive application 30 is obtained from the input device 60, or when a signal indicating that the attribute information associated with the inactive application 30 is passed to the active application 20 is obtained, the screen data generation unit 44 collects the attribute information extracted by the application information extraction unit 42. When the inactive application 30 for displaying the attribute information is specified to the display indication signal obtained from the input device 60 or the signal indicating that the attribution information is passed to the active application 20, the screen data generation unit 44 obtains the attribute information associated with the specified inactive application 30. Otherwise the screen data generation unit 44 may obtain all pieces of the attribute information associated with the inactive application extracted by the application information extraction unit 42 for each of the plurality of inactive applications. At this time, the screen data generation unit 44 associates and obtains the inactive application and the attribute information.

When the display indication signal is obtained, the screen data generation unit 44 generates the screen data in which the display window including the attribute information obtained from the application information extraction unit 42 is displayed in front of the display window regarding the active application 20, and outputs it to the display device 50. When the screen data generation unit 44 obtains the attribute information regarding the plurality of inactive applications 30, on the display window including the attribute information, all pieces of the attribute information may be displayed in a list or titles of the applications such as television, browser or the like may be displayed in a tab form, and the attribute information may be displayed for each application. By displaying them in the tab form, it is possible to be visually comprehensible for the user.

Moreover, when the signal indicating that the attribute information is passed to the active application 20 is obtained, the screen data generation unit 44 generates the screen data, which is the attribute information associated with the active application 20, and outputs it to the display device 50. In this case, the information associated with the active application 20 may associate the information specified beforehand for each inactive application 30. For example, when the application regarding the television corresponds to the inactive application 30, it is possible to generate the screen data, which is the attribute information regarding the broadcasting station associated with the active application 20, by specifying the broadcasting station name beforehand. Otherwise the attribute information passed from the inactive application 30 to the active application 20 may be changed according to the kind of the active the application 20. For example, the application regarding the e-mail is executed as the active application 20, and when the application regarding the browser is executed as the inactive application 30, the URL information associated with the application regarding the browser is passed to the active application 20. Moreover, when the application regarding the phonebook is executed as the active application 20, the focused URL information associated with the application regarding the browser is passed to the active application 20.

The application sharing unit 46 outputs the attribute information selected in response to a user operation to the screen data generation unit 44 among a plurality of pieces of attribute information that are displayed on the display device 50. For example, as the attribute information regarding the phonebook, a name, a telephone number, an e-mail address, and an address are displayed on the display device 50, and when the "name" is selected by the user operation using the attribute information input key 64, the application sharing unit 46 obtains a signal regarding the selection of the attribute information from the attribute information input key 64, and outputs it to the screen data generation unit 44. When the attribute information selected by the user is obtained from the application sharing unit 46, the screen data generation unit 44 generates the image data reflected with the attribute information on the display window regarding the active application 20, and outputs it to the display device 50.

The inactive application selection key 62 outputs the display indication signal to the screen data generation unit 44. Otherwise the inactive application selection key 62 outputs the signal indicating that the attribute information associated with the inactive application 30 is passed to the active application 20 to the screen data generation unit 44. The display indication signal is a signal generated by executing a user operation for displaying the attribute information associated with the inactive application 30 among the applications being executed on the display device 50. The attribute information input key 64 outputs an attribute information selection signal to the application sharing unit 46. The attribute information selection signal is a signal generated by executing a user operation for reflecting the selected attribute information to the active application 20 among the attribute information displayed on the display device 50.

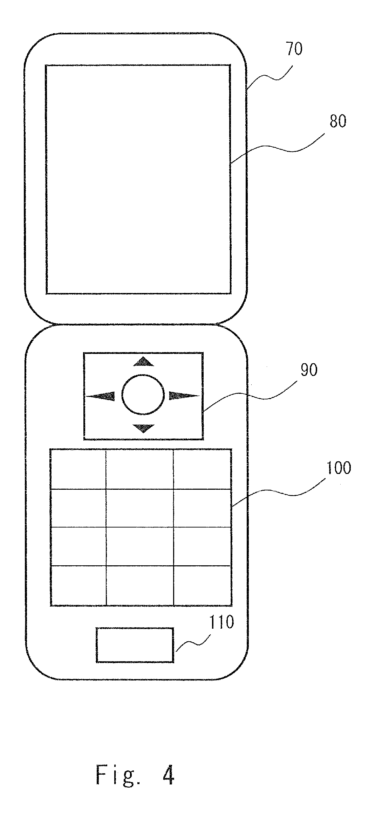

Next, using Fig. 4, an information terminal is explained as an example of the information terminal of Fig. 2. A mobile terminal 70 includes a display 80, a cross key 90, a numerical keypad 100, and an inactive application key 110. The display 80 displays an image according to the image data generated by the display control unit 40.

The inactive application key 110 corresponds to the inactive application selection key 62. When the inactive application key 110 is pressed by a user operation, the attribute information regarding the inactive application 30 is obtained by the display control unit 40, and passed to the active application 20. Then, an image regarding the screen data in which the attribute information is reflected to the active application 20 is displayed on the display 80. Moreover, an image showing a list of the attribute information associated with the inactive application 30 is also displayed on the display 80. The inactive application key 110 may be a button dedicated for executing the above process, or a button for other usage such as for switching the active application 20 and the inactive application 30 may also be used.

The cross key 90 and the numerical keypad 100 are used in order to select the information to be reflected to the active application 20 from the attribute information associated with the inactive application 30 displayed on the display 80. Additionally, a touch panel that displays icons on an LCD and an input device including physically arranged buttons may be used as the cross key 90 and the numerical keypad 100.

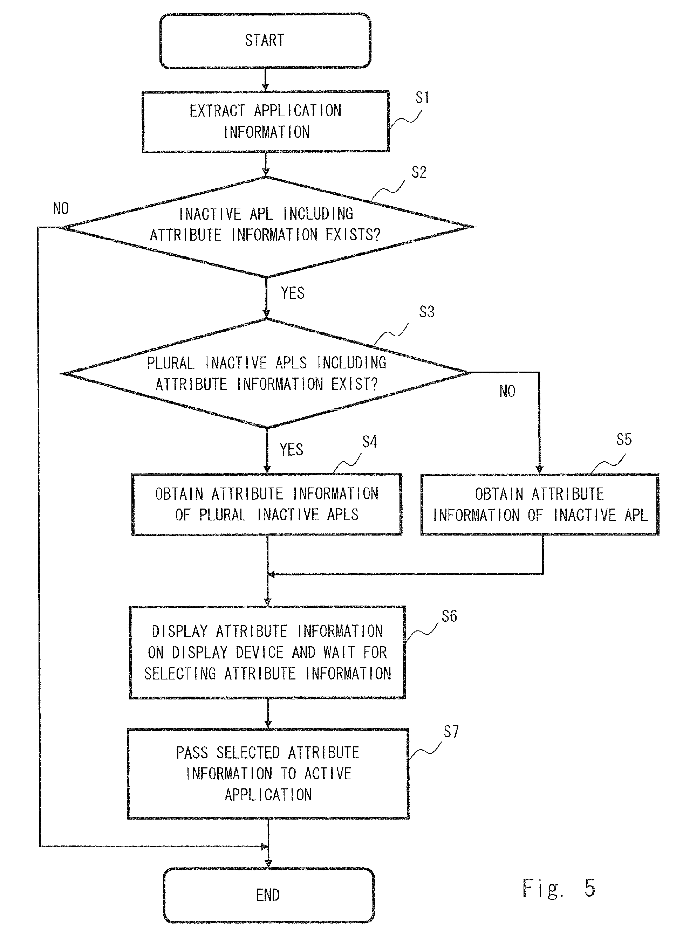

Next, a flow of the processes to pass the attribute information associated with the inactive application 30 to the active application 20 according to the exemplary embodiment of the present invention is explained using Fig. 5.

First, the application information extraction unit 42 extracts the attribute information associated with the active application 20 and the inactive application 30 (S1). The attribute information is generally stored to a memory or the like which is provided in the information terminal. Otherwise the attribute information may be stored to a storage device or the like which is connected outside the information terminal.

Next, as a result of extracting the attribute information collected in the step S1, the screen data generation unit 44 evaluates whether or not the attribute information associated with the inactive application 30 exists (S2). When the attribute information associated with the inactive application 30 does not exist, the process is ended.

Next, when the attribute information associated with the inactive application 30 exists, the screen data generation unit 44 evaluates whether or not a plurality of inactive applications 30 including the associated attribute information exists (S3),

Next, when the plurality of inactive applications 30 including the associated attribute information are evaluated to exist, the screen data generation unit 44 obtains the attribute information associated with each inactive application 30 from the application information extraction unit 42 (S4). In the step S3, when the plurality of inactive applications 30 including the associated attribute information are not evaluated to exist, that is, when only one inactive application 30 including the associated attribute information is evaluated to exist, the attribute information associated with the inactive application 30 is obtained from the application information extraction unit 42 (S5). In the steps S4 and S5, the screen data generation unit 44 outputs the screen data regarding the display window including the obtained attribute information to the display device 50.

Next, the application sharing unit 46 will be in an input waiting state for the attribute information selection signal that selected the information reflected to the active application 20 from the attribute information displayed on the display device 50 (S6). Specifically, the application sharing unit 46 will be in a reception waiting state for the attribute information selection signal from the attribute information input key 64. When the information reflected to the active application 20 is selected by the user operation, the application sharing unit 46 outputs the selected information to the screen data generation unit 44..
The screen data generation unit 44 passes the obtained information to the active application 20 (S7). Note that when the obtained attribute information is passed to the active application 20 without displaying it on the display device after the step S4 or S5, the process of the step S6 is omitted. Moreover, in the step S3, when the plurality of inactive applications 30 are evaluated to exist, the screen data generation unit 44 may generate the screen data that makes the user select the inactive application 30 including the attribute information to be passed to the active application 20. In addition, the attribute information regarding the inactive application 30 selected by the user may be passed to the active application 20 in the step S7, or the attribute information may be displayed on the display device 50 in the step S6.

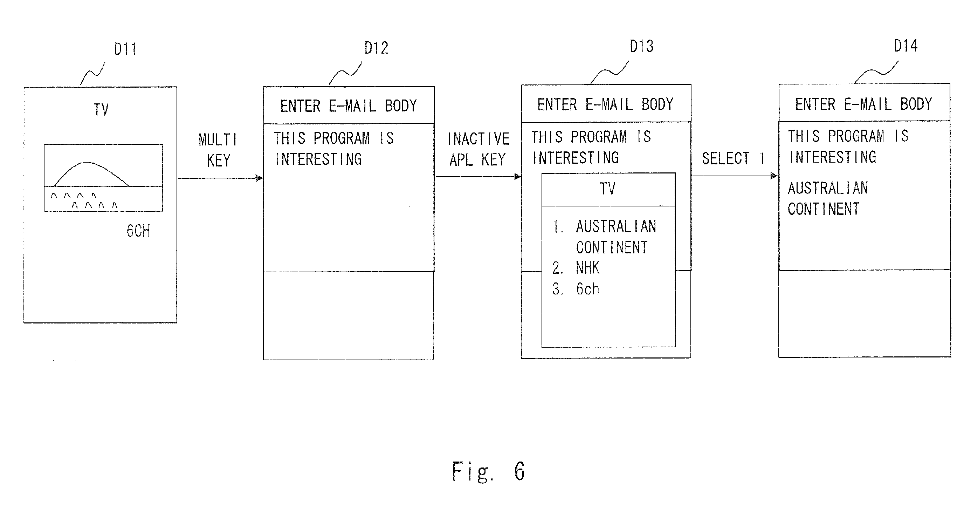

Next, a screen transition according to the exemplary embodiment of the present invention is explained using Figs. 6 to 8. Fig. 6 is an example of a case of starting a new e-mail composition screen of the application regarding the e-mail.

First, D11 indicates the state in which a television image is projected on the display 80. Next, D12 indicates the state of starting the new e-mail composition screen using a multi-task key for switching the active application 20 and the inactive application 30. At this time, the active application 20 is an application regarding the e-mail that displays the new e-mail composition screen, and the inactive application 30 is an application regarding the television. That is, the information input using the numerical keypad 100 or the like in the state of D12 is reflected to the new e-mail composition screen. Next, D13 indicates the state in which the inactive application key 110 is pressed and the attribute information associated with the inactive application 30 is displayed. By pressing the inactive application key 110, a list of the attribute information associated with the application regarding the television is displayed. Next, D14 indicates the state in which a program name "Australian continent" selected using the cross key 90 or the numerical keypad 100 is reflected to the new e-mail composition screen, which is the active application 20, from the attribute information associated with the application regarding the television.

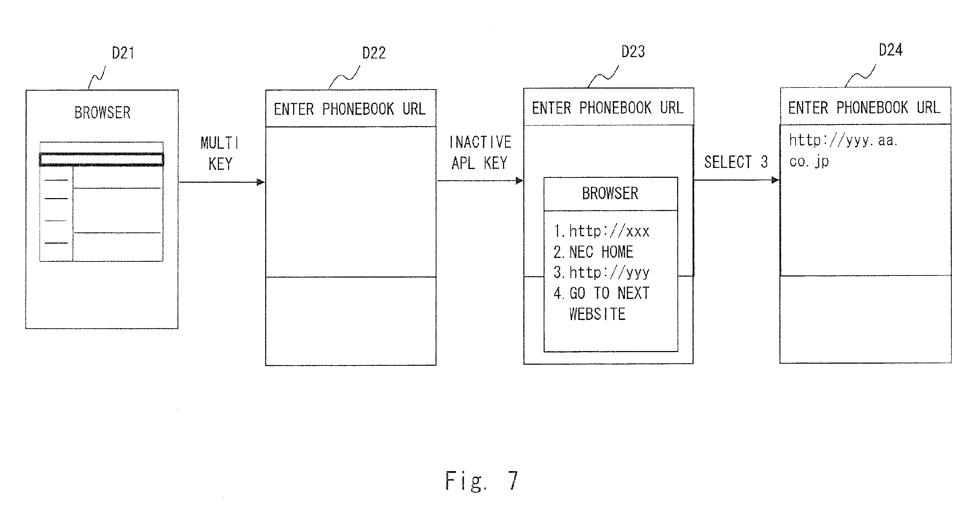

Fig. 7 is an example of a case of starting the application regarding the phonebook while viewing the image displayed on the browser. First, D21 indicates the state in which the image viewed on the browser is displayed on the display 80. Next, D22 indicates the state of starting an URL input screen of the application regarding the phonebook using the multi-task key for switching the active application 20 and the inactive application 30. At this time, the active application 20 is the application regarding the phonebook, and the inactive application 30 is the application regarding the browser. Next, D23 indicates the state in which the inactive application key 110 is pressed by the user operation and the attribute information associated with the inactive application 30 is displayed. By pressing the inactive application key 110, a list of the attribute information associated with the application regarding the television is displayed. Next, D24 indicates the state in which an URL selected using the cross key 90 or the numerical keypad 100 from the attribute information associated with the application regarding the browser is reflected to the URL input screen, which is the active application 20.

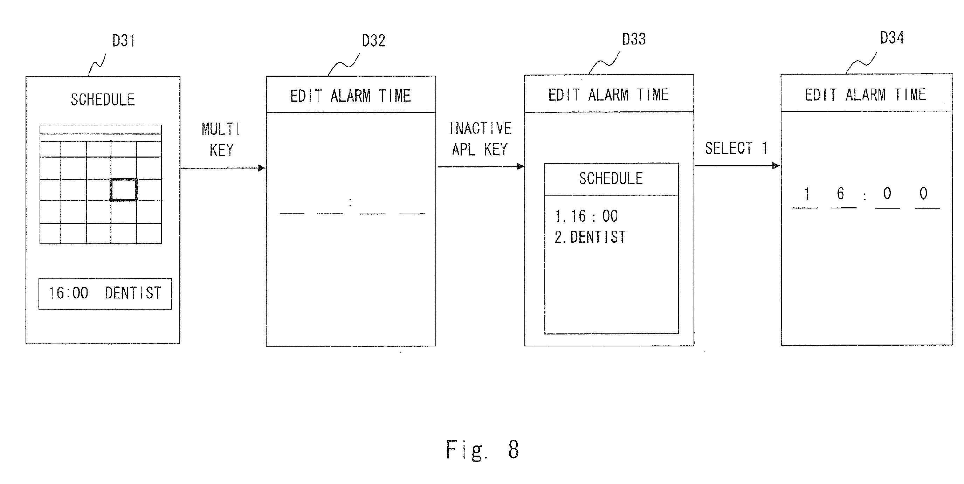

Fig. 8 is an example of a case of starting the application regarding alarm time editing while viewing schedule. First, D31 indicates the state in which the application regarding schedule is displayed on the display 80. Next, D32 indicates the state of starting the application regarding alarm time editing using the multi-task key for switching the active application 20 and the inactive application 30. At this time, the active application 20 is an application regarding the alarm time editing, and the inactive application 30 is a schedule application. Next, D33 indicates the state in which the inactive application key 110 is pressed by a user operation and the attribute information associated with the inactive application 30 is displayed. By pressing the inactive application key 110, a list of the attribute information associated with the application regarding the television is displayed. Next, D34 indicates the state in which time information selected using the cross key 90 or the numerical keypad 100 from the attribute information associated with the application regarding the schedule is reflected to an alarm time editing screen, which is the active application 20.

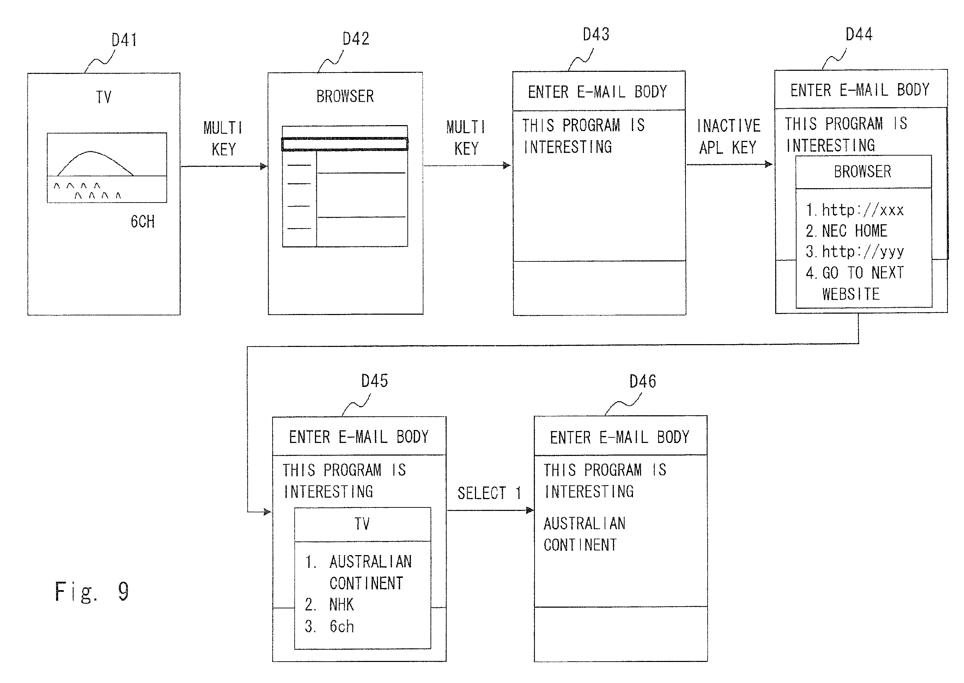

Next, a screen transition when a plurality of inactive applications exist in the exemplary embodiment of the present invention is explained using Fig. 9. First, D41 indicates the state of starting the application regarding the television and displaying a television image on the display 80. Next, D42 indicates the state of starting the application regarding the browser using the multi-task key and displaying a specified homepage on the display 80. In this state, the application regarding television will be the inactive application, and the application regarding the browser will be the active application. Next, D43 indicates the state of starting the application regarding the e-mail using the multi-task key and displaying the new e-mail composition screen on the display 80. In this state, the application regarding the television and the application regarding the browser will be inactive applications, and the application regarding the e-mail will be the active application.

Next, D44 indicates the state of displaying the attribute information associated with the application regarding the browser by the user operating the inactive application key 110. Next, D45 indicates the state of displaying the attribute information associated with the application regarding the browser by the user further operating the inactive application key 110. Next, D46 indicates that when a program name "Australian continent" is selected by the user operation and "Australian continent", which is the selected attribute information, is reflected to the new e-mail composition screen of the application regarding the e-mail.

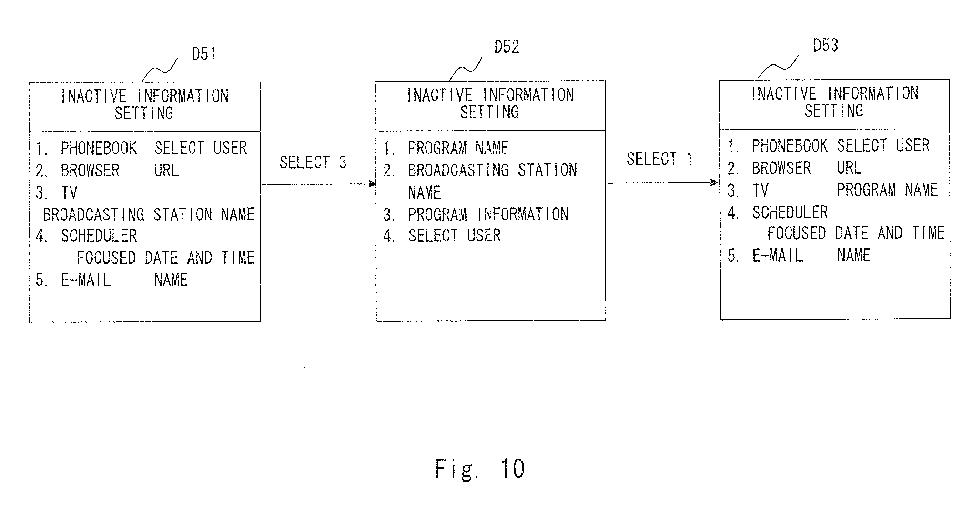

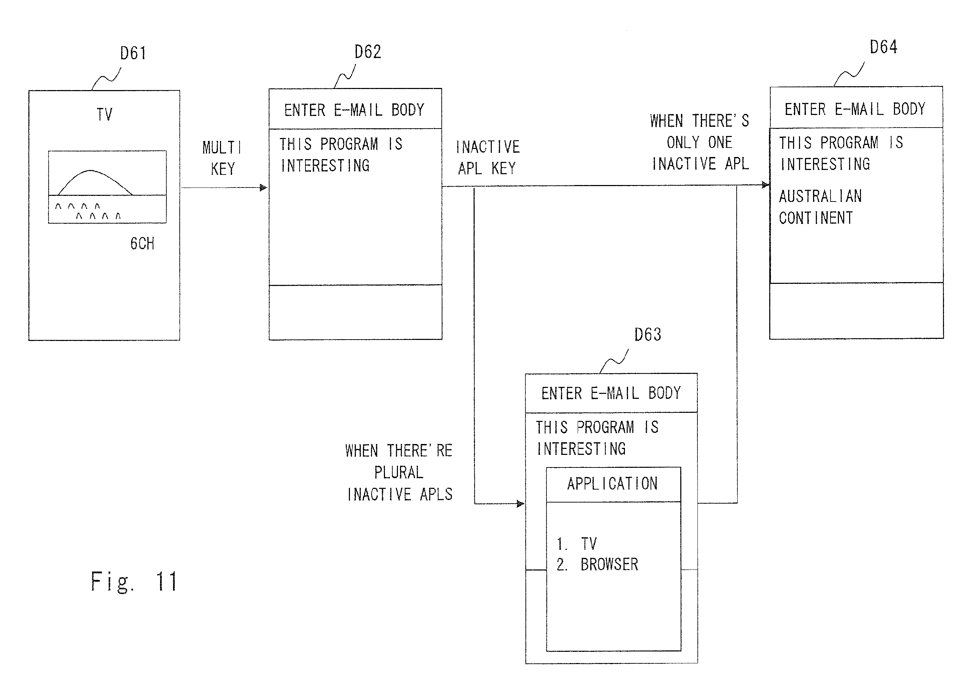

Next, an example of an operation screen when the attribute information associated with the inactive application is specified beforehand in the exemplary embodiment of the present invention is explained using Figs. 10 and 11.

D51 indicates the state of displaying the image for selecting the application that specifies the attribute information beforehand on the display 80. Further, the state of displaying each application and the attribute information previously specified to the application is indicated. Next, D52 indicates the state in which a list of attribute information associated with the application regarding the television is displayed when the television is selected in D51. Next, when the program name is selected in D52, D53 indicates the state of displaying that the program name is specified as the attribute information for previously specifying the application regarding the television.

Next, D61 in Fig. 11 indicates the state in which the application regarding television is started and a television image is displayed on the display 80. Next, D62 indicates the state in which the application regarding the e-mail is started using the multi-task key and the new e-mail composition screen is displayed on the display 80. Next, when the inactive application key 110 is operated by the user, and when only one inactive application is started, specifically in this example, when only the application regarding the television is started, D64 indicates the state in which a content of the program name is reflected to the new e-mail composition screen as the previously specified attribute information without displaying the list of attribute information. Moreover, when the plurality of inactive applications are started, as shown in D63, it moves to the screen for selecting the application, and the attribute information previously specified to the selected application is reflected to the new e-mail composition screen.

As explained above, it is possible to use the attribute information associated with the inactive application in the active application without activating the inactive application using the information terminal according to the exemplary embodiment of the present invention. Accordingly, it is possible to realize a cooperating operation of the inactive application and the active application by simple operations.

Note that the present invention is not limited to the above exemplary embodiment of the present invention, but may be changed as appropriate without departing from the scope. For example, although the exemplary embodiment explained examples of dealing only text information, it is possible to deal with image data, movie data, and music data or the like as the attribute information.

The above exemplary embodiment explained the present invention as a hardware configuration, however the present invention is not limited to this. The present invention can also realize arbitrary processes by making CPU (Central Processing Unit) execute a computer program.

The above program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Although the present invention is explained with reference to the exemplary embodiment, the present invention is not limited by above. Various modifications that can be understood by a person skilled in the art can be made to the configuration and details of the present invention within the scope of the invention.

The present application claims priority rights of and is based on Japanese Patent Application No. 2009-230461 filed on October 2, 2009 in the Japanese Patent Office, the entire contents of which are hereby incorporated by reference.

### Reference Signs List

- 1: INFORMATION TERMINAL
- 10: MEMORY
- 20: ACTIVE APPLICATION
- 30: INACTIVE APPLICATION
- 40: DISPLAY CONTROL UNIT
- 42: APPLICATION INFORMATION EXTRACTION UNIT
- 44: SCREEN DATA GENERATION UNIT
- 46: APPLICATION COOPERATION UNIT
- 50: DISPLAY DEVICE
- 60: INPUT DEVICE
- 62: INACTIVE APPLICATION SELECTION KEY
- 64: ATTRIBUTE INFORMATION INPUT KEY
- 70: MOBILE TERMINAL
- 80: DISPLAY
- 90: CROSS KEY
- 100: NUMERICAL KEYPAD
- 110: INACTIVE APPLICATION KEY

## Claims

1. An information terminal comprising:
a display control means that can execute first and second applications at the same time and also generates screen data so that, between a first display window regarding the first application and a second display window regarding the second application, the display window regarding one of the applications, which is an object to be operated by a user, is preferentially displayed in front;
a display device that performs image display according to the screen data; and
an input device that accepts an operation by the user,
wherein in response to an operation to the input device by the user when the first application is the object to be operated, the display control means obtains attribute information regarding the second application, which is not the object to be operated, and passes it to the first application without switching the object to be operated to the second application.

2. The information terminal according to Claim 1, wherein the display control means
generates the screen data in which a third display window including display of at least one piece of the attribute information is displayed in front of the first display window in response to a first operation to the input device by the user when the first application is the object to be operated, and
in response to a second operation to the input device by the user following the first operation, passes information selected from the at least one piece of the attribute information to the first application.

3. The information terminal according to Claim 1, wherein in response to the operation to the input device by the user when the first application is the object to the operated, the display control means passes the attribute information associated with the second application beforehand to the first application without switching the object to be operated to the second application.

4. The information terminal according to one of Claims 1 to 3, wherein the display control means
when a plurality of applications can be executed at the same time, generates the screen data in which a fourth display window including display of a name of an application other than the first application is displayed in front of the first display window in response to a third operation to the input device by the user when the first application included in the plurality of applications is the object to be operated, and
in response to a fourth operation to the input device by the user following the third operation, obtains the attribute information regarding the application selected from the applications other than the first application, and passes it to the first application.

5. A display method comprising:
when first and second applications can be executed at the same time, generating screen data so that, between a first display window regarding the first application and a second display window regarding the second application, the display window regarding one of the applications, which is an object to be operated by a user, is preferentially displayed in front; and
in response to an operation by the user when the first application is the object to be operated, obtaining attribute information regarding the second application, which is not the object to be operated, and passing it to the first application without switching the object to be operated to the second application.

6. The display method according to Claim 5, further comprising:
when the attribute information regarding the second application, which is not the object to be operated, is obtained and passed to the first application,
generating the screen data in which a third display window including display of at least one piece of the attribute information is displayed in front of the first display window in response to a first operation by the user when the first application is the object to be operated; and
passing information selected from the at least one piece of the attribute information in response to a second operation to the input device by the user following the first operation.

7. The display method according to Claim 5, further comprising when the attribute information regarding the second application, which is not the object to be operated, is obtained and passed to the first application, passing the attribute information associated with the second application beforehand to the first application in response to the operation by the user when the first application is the object to be operated without switching the object to be operated to the second application.

8. The display method according to one of Claims 5 to 7, further comprising:
when the screen data in which the display window regarding one of the applications, which is the object to be operated by the user, is preferentially displayed in front,
when a plurality of applications can be executed at the same time, generating the screen data so that the display window regarding the first application, which is included in the plurality of applications and is the object to be operated by the user;
generating the screen data in which a fourth display window including display of a name of an application other than the first application is displayed in front of the first display window in response to a third operation by the user; and
obtaining the attribute information regarding the application selected in response to a fourth operation by the user from the name of the application displayed on the fourth display window, and passing it to the first application.

9. A non-transitory computer readable medium storing a program that causes a computer included in an information terminal to execute:
when first and second applications can be executed at the same time, a step of generating screen data so that, between a first display window regarding the first application and a second display window regarding the second application, the display window regarding one of the applications, which is an object to be operated by a user, is preferentially displayed in front; and
a step of, in response to an operation by the user when the first application is the object to be operated, obtaining attribute information regarding the second application, which is not the object to be operated, and passing it to the first application without switching the object to be operated to the second application.
